# EUROPEAN PATENT SPECIFICATION

(11) **EP 3 206 953 B1**
(45) Date of publication and mention of the grant of the patent: **26.09.2018**
(21) Application number: 15804942.9
(22) Date of filing: 15.10.2015
(51) Int. Cl.: B65B 23/20, B65B 55/20, B25J 15/00, B25J 13/08, B65B 57/16

(54) **GROUP FOR POSITIONING PROTECTION ELEMENTS INSIDE A RIGID PACKAGE AND METHOD FOR POSITIONING SUCH PROTECTION ELEMENTS**
GRUPPE ZUR POSITIONIERUNG VON SCHUTZELEMENTEN IN EINER STARREN VERPACKUNG SOWIE VERFAHREN ZUR POSITIONIERUNG VON DERARTIGEN SCHUTZELEMENTEN
GROUPE DE POSITIONNEMENT D'ÉLÉMENTS DE PROTECTION DANS UN EMBALLAGE RIGIDE ET PROCÉDÉ DE POSITIONNEMENT DE TELS ÉLÉMENTS DE PROTECTION

(30) Priority: 15.10.2014 IT VR20140251
(43) Date of publication of application: 23.08.2017
(73) Proprietor: Bema S.r.l., 42030 Viano (Reggio Emilia) (IT)
(72) Inventor: SFORACCHI, Gianluca, I-42030 Viano (Reggio Emilia) (IT)
(74) Representative: Feltrinelli, Secondo Andrea
(86) International application number: PCT/IB2015/057930
(87) International publication number: WO 2016/059595

(56) References cited:
- EP-A1- 1 884 483
- EP-A1- 2 370 319
- EP-A1- 2 666 599
- JP-A- S 614 630
- JP-A- S60 236 022
- US-A- 4 232 788
- US-A- 4 813 732
- US-A1- 2006 101 789
- US-A1- 2011 210 120

## Description

### TECHNICAL FIELD OF THE INVENTION

The present invention refers to a group for positioning protection elements for substantially flat items, such as tiles or plates, e.g. ceramic, stacked inside a rigid package such as a wood box or the like.

The present invention also regards the forming of the aforesaid protection elements.

The protection elements maintain the items in position, keeping them suitably spaced from the walls of the rigid package or box.

In addition, the present invention refers to a method for positioning the aforesaid protection elements inside a rigid package or box, and also to a method for forming the aforesaid protection elements.

### STATE OF THE PRIOR ART

Generally, for the transport of plate-shaped items, such as tiles or the like, e.g. made of ceramic, provision is made for using rigid packages, usually wood boxes provided with an upper opening which is closed by means of a rigid cover or a plastic sheet, within which the items themselves are arranged stacked with each other.

The rigid package or box usually has a size in plan view greater than that of the items inserted therein, in order to ensure a necessary minimum handling space, in order to allow the insertion of the items.

Between the box and the items, there is an interspace in order to prevent the items from coming into direct contact with the external package and also for allowing the manufacturing of packages with a certain size tolerance, so as to reduce the costs of the relative construction thereof.

In order to protect the items from impact, which they can receive from the outside on the rigid package or box, the interspace is filled with anti-impact or damping elements.

Such anti-impact or damping elements also serve for preventing, during the movement or transport, the stack of items from becoming twisted and impacting against the lateral walls of the rigid package or box, or for preventing the items in the stack from being moved with respect to each other, thus damaging the items themselves.

In order to remedy such need, provision is made for using filler materials, e.g. wedges or similar elements of parallelepiped shape made of anti-impact material or granules, corrugated cardboard sheets, foamed material sheets, to be inserted in the aforesaid interspace.

One problem of the filler materials of known type, e.g. wedges or similar elements of parallelepiped shape, is that such elements are not completely blocking and that normally the insertion in the interspace is done manually. Another problem of the filler materials of known type, for example in granular form, regards the poor capacity to maintain all the items of the stack firmly in position.

An apparatus comprising the features of the preamble of claim 1 is known from patent document EP 2 370 319 B1.

There is therefore the need in the field to provide protection elements which can be easily inserted in an automated manner.

There is also the need to reduce the time necessary for arranging the protection elements or the filler material within the package, in order to prevent limiting the production capacity of a production line.

In addition, there is the need to provide protection elements that facilitate the blocking of all the items stacked inside a rigid package.

There is also the need to have protection elements which can maintain, firmly in position, the items stacked inside a rigid package and to have protection elements which are capable of being fit in the actual space between the stacked items and the internal wall of the package.

Furthermore, there is the need to provide protection elements which are capable of effectively damping the stresses or possible impact to which the items within the package or box can be subjected, in order to ensure the integrity of such items.

### OBJECTS OF THE INVENTION

The technical task of the present invention is to improve the prior state of the art.

In the scope of such technical task, one object of the present invention is to provide a group for positioning protection elements for items, e.g. items stacked together, to be arranged inside a rigid package or box, in a position interposed between the items and the rigid package, capable of maintaining the items firmly in position.

A further object of the present invention is to provide a group for positioning protection elements for items arranged inside a rigid package or box, of automated type and such to autonomously detect the position of the rigid package and/or of the items therein.

Another object of the present invention is to provide a group for positioning protection elements for items arranged inside a rigid package which allows precisely positioning the protection elements within the package itself, in reduced times.

According to one aspect of the present invention, a group is provided for positioning protection elements for items arranged inside a rigid package or box according to claim 1.

According to a further aspect of the present invention, a process is provided for positioning protection elements to be interposed between a stack of items and a rigid package, executed through the aforesaid group for positioning protection elements, according to the enclosed claim 13.

The dependent claims refer to preferred and advantageous embodiments of the invention.

### BRIEF DESCRIPTION OF THE DRAWINGS

Further characteristics and advantages of the present invention will be clearer from the detailed description of a preferred but not exclusive embodiment of a group for positioning and forming protection elements, illustrated as a nonlimiting example in the set of drawings, in which:
figure 1 is a schematic view of a group for positioning and forming protection elements, during an operating step, in proximity to a rigid package or box;
figure 2 is a top schematic view of a possible arrangement of the protection elements inside a rigid package or box;
figure 3 is a top perspective view of a group for positioning and forming protection elements according to the present invention;
figure 4 is a bottom perspective view of a detail of the group for positioning and forming protection elements according to the present invention;

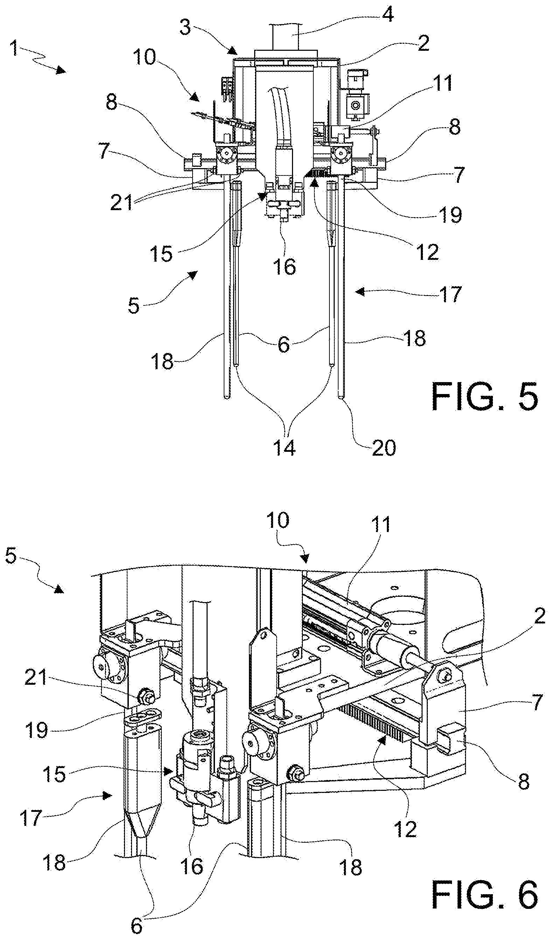

figure 5 is a front view of a group for positioning and forming protection elements according to the present invention;
figure 6 is a top perspective view of a detail of the group for positioning and forming protection elements according to the present invention.

### EMBODIMENTS OF THE INVENTION

With reference to the enclosed figures, a group is illustrated for positioning protection elements, indicated overall with reference number 1.

The positioning group 1 according to the present invention allows arranging elements P for protecting items A that are arranged, e.g. stacked together, inside a rigid package or box B.

As will be more evident hereinbelow, the positioning group 1 according to the present invention can also allow forming the same protection elements P.

The rigid package or box B has an upper access opening, which can be closed by means of a respective cover, or other closure means, e.g. a plastic sheet, not illustrated in the figures.

During use, the protection elements P are arranged in a position interposed between the stack of items A and the walls of the box B.

The protection elements P are obtained starting from a casing P1 made of plastic material, substantially shaped like an elongated bag, which has one open side through which a material in liquid form is initially inserted, which is made to expand and solidify by means of a reagent, or a catalyst, in a manner so as to form a solid filler P2 according to modes better described hereinbelow.

In accordance with one version of the present invention, the single casings P1 can be fed to the positioning group 1 starting from a reel, on which they are wound in strip form, not illustrated in the figures, comprising a plurality of pre-cut casings placed in succession one after the other.

The aforesaid casings P1 are cut from the reel and are provided open to the positioning group 1 by suitable distribution means which are not further described since they are not the object of the present invention.

The forming group 1 comprises a support frame 2 fixed, by means of quick coupling means 3, to an arm 4 of a robot, e.g. an anthropomorphous robot or Cartesian robot with at least three axes, if the rotation of the group 1 is carried out by means of suitable rotation means, or with four axes.

The quick coupling means 3 comprise a shank selectively couplable to the arm 4 of the robot by means of engagement means, not illustrated since they are not the object of the present invention.

By means of the arm 4, the positioning group 1 can be moved, vertically and/or horizontally, with respect to a box B, in order to position the protection elements P at its interior, in predefined points.

The positioning group 1 comprises a gripper for gripping a casing PI, operatively connected to the support frame 2, indicated with the number 5.

The gripper 5 comprises two arms 6 that can approach and move away from each other in a manner such that the arms 6 themselves can be inserted within the casing PI; such arms can be adapted to the size of the casing P1 to be picked up and they can place the casing P1 under tension during the operating steps of the positioning group 1, as better described hereinbelow.

The arms 6 of the gripper 5 are movably constrained to the support frame 2 by means of respective brackets 7, each bracket 7 comprising a guide 8 slidably engaged along sliders 9 constrained to the support frame 2.

The guides 8 are parallel to each other and identify a slide direction X. According to the present invention, the arms 6 are shaped as substantially rod-like elongated elements.

During use, the arms 6 are extended below the support frame 2, along a substantially vertical direction.

In the illustrated embodiment, the guides 8 and the sliders 9 are provided below the support frame 2.

Nevertheless, further embodiments are possible in which the guides 8 and the sliders 9 are, for example, positioned in a different manner with respect to the support frame 2, but are in any case such to identify a sliding direction X for the arms 6 of the gripper 5.

The positioning group 1 comprises means for moving the arms 6 of the gripper 5, along the direction X, also in a synchronized manner with respect to each other, indicated with 10.

The movement means 10 are configured in a manner such to mutually approach and move away the arms 6 along the first direction X, thus allowing the adaptation of the size of the gripper 5 to that of the casing P1.

With reference to the illustrated embodiment, the movement means 10 can comprise at least one drive 11, e.g. of the type comprising a slide valve, a piston with electromechanical drive or the like, operatively connected to one of the two brackets 7 and a connection of pinion-rack type interposed between the two guides 8.

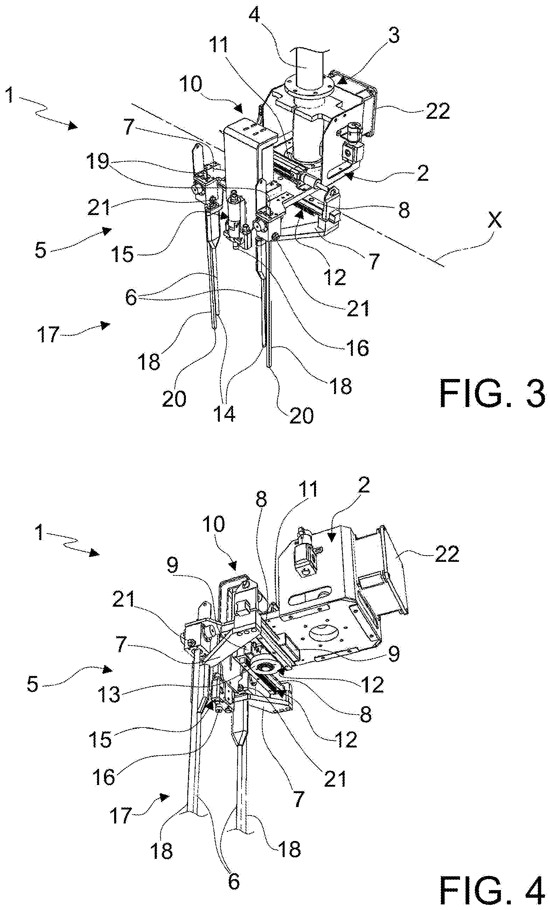

Each guide 8 can have at least one toothed sector 12 which during use is meshed with a pinion 13, the latter being interposed in central position between the two guides 8 (see figure 4).

In practice, by means of the at least one drive 11, one controls the translation of a bracket 7 and the guide 8 connected thereto along the direction X.

In turn, the toothed sector 12 of the guide 8 sets the rotation of the pinion 13 and, consequently, the translation of the toothed sector 12 of the other guide 8 which also meshes with the pinion 13.

In such a manner, the translation of one bracket 7, set by the drive 11, causes the translation of the other bracket 7.

In practice, the at least one drive 11 controls the opening and closing of the arms 6 of the gripper 5.

According to a further embodiment, not illustrated, provision can be made for a drive 11 comprising motor means of brushless type with controlled rotation, provided with a motion output shaft connected directly with the pinion 13.

According to such version, the rotating of the motor means sets the mutual approaching and moving away of the arms 6 of the gripper 5.

Further embodiments, not illustrated, can be provided that lack the pinion-rack connection between the two guides 8.

In such case, the movement means 10 can comprise single drives 11 connected to respective arms 6 of the gripper 5.

In addition, provision can also be made for other kinematic mechanism embodiments for the mutual approaching and moving away of the arms 6 of the gripper 5, e.g. a kinematic mechanism with double crank and relative connecting rods.

As stated, each arm 6 is provided for being inserted, in use, inside a casing P1. For such purpose, it is observed that each arm 6 has a free end 14, rounded, in a position diametrically opposite the support frame 2.

The free end 14 is rounded in order to prevent piercing or damaging the casing PI, and it is provided that such free end be inserted in the casing P1 up to a certain distance from the bottom of the casing P1.

In use, both the arms 6 of the gripper 5 are introduced in the casing P1, for a certain section of the length of the casing P1 itself.

As stated above, once introduced in the casing PI, the arms 6 will for example be situated several centimeters from the bottom of the casing PI, for the reasons that shall be better explained hereinbelow.

Then, the arms 6 are moved away from each other so as to place the entire casing P1 under tension.

According to one aspect of the present invention, the positioning group 1 comprises means, indicated with 15, for emitting a filler mixture or fluid P2 which will be delivered within the casing P1.

According to one version of the present invention, the positioning group 1 comprises means for blowing air (not illustrated) into the casing P1 in a manner such to extend and completely open the casing P1 itself, and in particular to extend the bottom of the casing P1.

In this manner, the casing P1 is prepared to receive the filler mixture or fluid P2: it must be observed that the filler mixture or fluid P2 has to expand starting from the bottom of the rigid package or box B in order to also effectively protect the lowest-placed item.

The air blowing means can be arranged between the arms 6 above the casing PI, when this is extended between the arms 6 themselves, or they can be arranged in the arms 6, i.e. the arms 6 comprise air outlet holes (not illustrated) which are situated at the free ends 14 and possibly also in the lateral surface of the arms 6.

In addition, such air blowing means can also be used for facilitating the separation of the casing P1 from the arms 6, when these arms 6 must be extracted from the casing P1 in order to not remain attached or dirtied by the filler mixture or fluid P2.

The emission means 15 are constrained to the support frame 2, in a substantially central position between the arms 6, in a manner such that, during use, the emission means 15 face each other on the upper part within the casing P1.

The emission means 15 comprise delivery means 16 from which a filler fluid, e.g. a liquid or a mixture, is delivered as well as - subsequently, or even simultaneously - a reagent, or a catalyst, capable of expanding and solidifying the filler fluid; the delivery means 16 can comprise one or two nozzles, in the latter case, there is a nozzle for the liquid or mixture and a nozzle for the reagent or catalyst.

In the enclosed figures, the means for feeding the aforesaid filler fluid to the emission means 15 are not illustrated in detail; such means can comprise suitable ducts connected to at least one storage tank of the filler fluid to be inserted in the casing P1.

According to one version of the present invention, the filler fluid can be selected from among the group of polyols, and in such case the reagent is a catalyst agent.

The positioning group 1 comprises sensor means 17, constrained to the support frame 2, adapted to detect, in an automated manner, the presence of the rigid package or box B and/or of obstacles.

The sensor means 17 can detect the position of the lateral wall of the rigid package B, for example the plane of the external surface of the lateral wall of the rigid package or box B or even the plane of the internal surface of the lateral wall.

According to modes better explained hereinbelow, the signal of such position is sent to a control unit (not illustrated) which then stores it. In the control unit, also the data relative to the size of the rigid package B is stored, and in particular the thickness of the wall of the rigid package or box B or the width of the interspace I.

Hence, by knowing and reprocessing such data, the control unit is capable of precisely commanding the arm 4 of the robot, guiding the positioning group 1 into predefined positions of the interspace I in which the protection elements P are placed, without impacting the walls of the package or the items A.

According to one version of the present invention, the sensor means 17 can comprise at least one pair of rod-like probes 18 which are extended below the support frame 2.

According to one version of the present invention, the probes 18 are provided laterally with respect to the arms 6, suitably spaced therefrom so as to not interfere with them.

The probes 18 have a length at least equal to or greater than that of the arms 6.

Each probe 18 is elastically constrained, so as to be able to slightly oscillate, at its upper end 19 to the support frame, while the lower end 20 is free.

At the upper ends 19, sensor means 21 are present which detect the oscillations of the probes 18 due for example to impact or vibrations.

Each probe 18 therefore detects the presence and position of a wall of the rigid package or box B, or the position of the stack of items A, as soon as it makes contact with this.

The oscillation of the probe 18 is detected by the sensors 21 which, in turn, transmit a signal to a data processing unit 22, possibly comprised in the positioning group 1 itself.

The data processing unit 22 is interfaced with the abovementioned control unit which controls the driving of the arm 4 of the robot in order to command the movement of the positioning group 1 itself.

As stated, the sensor means 17 allow precisely detecting the position of the walls of the rigid package or box B, along with that of the items A stacked inside the latter, in order to correctly position the positioning group 1 at the interspace present therebetween.

It must be observed that the sensor means 17 can also be of different type, for example of optical type, and in any case they must be able to precisely detect the position of the walls of the rigid package or box B and that of the items A. The operation of the present invention is as follows.

A rigid package or box B is provided, lacking upper cover, within which the items A are positioned; such items are stacked together and possibly a separation sheet lies between one item A and the next.

An interspace I is present within the rigid package or box B, around the lateral perimeter of the stacked items A.

Then, a casing P1 is fed to the positioning group 1, such casing P1 is positioned between the arms 6, which in turn are inserted in the casing P1 itself.

The arms 6 have the free ends 14 which are situated at a certain distance from the bottom of the casing P1 itself.

At this point, the casing P1 is placed under tension by opening the gripper 5, thus moving the arms 6 away from each other along the direction X, by means of the movement means 10, stably retaining the casing P1 itself at the gripper 5.

By means of the arm 4 of the robot, the positioning group 1 is moved until the sensor means 17 are placed in proximity to the box B.

The probes 18 allow identifying the position of the external walls of the box B, whose thickness is known as it is inserted in the data of the control unit.

Therefore, once the external position of the walls of the box B is known, the positioning group 1 is moved at the internal sides thereof, placing the gripper 5 and the casing P1 above the interspace I.

Then, the positioning group 1 is lowered, introducing the casing P1 within the interspace I.

If during the movement of the positioning group 1 within the interspace I, the sensor means 17 impact against the items A, the sensors 21 detect the deformation/movement of the probes 18 and send a signal to the processing unit 22.

The latter is interfaced with the control unit that controls the robotic arm 4 in order to correctly reposition the positioning group 1 itself.

With the casing P1 inserted in the interspace I, at a pre-established position, the air blowing means blow a certain amount of compressed air, in order to extend and completely open the casing P1 so to prepare it to receive the filler mixture or fluid P2.

Then, the emission means 15 are actuated which cause the delivery of a predefined amount of the filler mixture or fluid P2 within the casing P1.

Subsequently or simultaneously, the emission means 15 emit a reagent or catalyst within the casing PI, which reacts with the filler fluid, causing the expansion and subsequent solidification thereof until the solid filler material P2 is obtained.

Possibly, instead of a fluid and a reagent, the filler means 15 can emit a reagent mixture with air, i.e. of the type that is expanded or subsequently solidified in contact with air.

Simultaneously or in the instants immediately following the emission of the filler fluid and its reagent or of the reagent mixture, the gripper 5 releases the casing PI, moving the arms 6 close together, and the positioning group 1 is lifted by the robotic arm 4 until the arms 6 are completely extracted from the casing P1 itself, in order to prevent the latter from being incorporated within the filler P2 that is solidifying.

In order to facilitate the extraction of the arms 6 from the casing PI, the air blowing means can blow a certain amount of compressed air.

The protection element P, due to the expansion of the filler material P2 within the casing PI, is inflating, being firmly wedged between the item A and the internal surface of the wall of the box B.

The amount of the filler material P2 that is introduced in the casing P1 can be such that, in the expansion step, it can also reach a bit above the stack of items A, so as to also protect the upper surface of the stack of items A, but in a manner so as to not be attached to or dirty such upper surface.

Further protection elements P are made along the interspace I by proceeding in a manner analogous to that stated above.

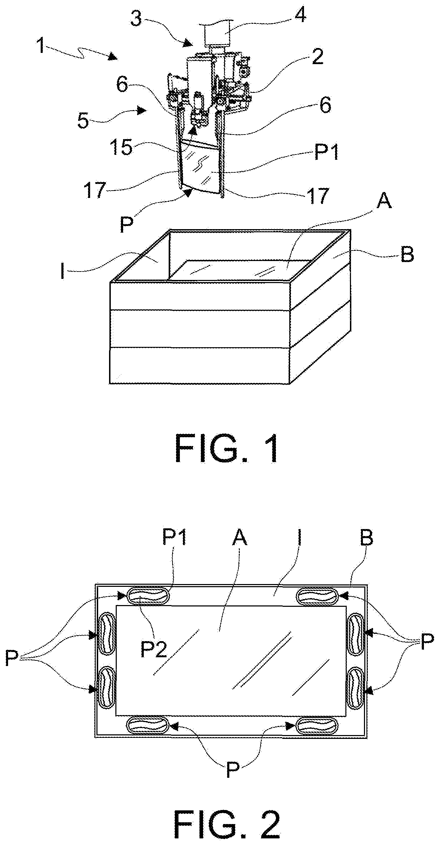

With reference to the scheme illustrated in figure 2, the protection elements P can be positioned in proximity to the corners of the stack of items A, on opposite sides.

It is possible to provide for a greater or smaller number of protection elements P, possibly arranged in a different manner from that described above, without departing from the protective scope of the present invention.

It is observed that the protection elements P are effectively abutted against the lateral wall of the stack of items A, for the entire height of the stack, thus ensuring a stable lateral support for the items A themselves.

In addition, the protection elements P thus formed comprise a blocking and damping filler material P2 at their interior that is thus capable of ensuring an effective damping of the impact and vibrations to which the box is subjected during the movement thereof.

The positioning of the single protection elements P, which can be achieved by means of the positioning group 1, is precise and such to provide an effective lateral support to the stack of items A.

In addition, the time necessary for making the single protection elements P is limited, since they can be made in an autonomous manner by the positioning group 1.

The invention thus conceived is susceptible of numerous modifications and variants, all falling within the scope of the inventive concept.

In addition, all details can be substituted with other technically equivalent elements. In practice, the materials used as well as the contingent shapes and sizes can be of any type in accordance with requirements, without departing from the protective scope of the following claims.

## Claims

1. Group for positioning an element (P) for protecting items (A), such as ceramic plates or tiles, arranged stacked inside a rigid package or box (B), at an interspace (I) present within the rigid package or box (B) around the lateral perimeter of the items (A) between said rigid package or box (B) and said items (A), said positioning and gripping group comprising a support frame (2), quick coupling means (3) connectable to an arm (4) of a robot, a gripper (5) connected to said support frame (2), wherein said gripper (5) is shaped for retaining said protection element (P) and for releasing it into said interspace (I), said protection element (P) comprising a casing (P1) and a filler material (P2), **characterized in that** said gripper (5) comprises two arms (6), which are shaped as rod-like elongated elements, that can approach and move away from each other in a manner such that said arms (6) can be inserted within said casing (P1), wherein said arms (6) can be adapted to the size of said casing (P1) to be picked up and said arms (6) can place said casing (P1) under tension, each of said arms (6) having a free end (14) at a position diametrically opposite to said support frame (2), wherein said free end (14) is rounded in order to prevent piercing or damaging of said casing (P1).

2. Positioning group (1) according to claim 1, wherein said filler material (P2) comprises a fluid or a filler mixture and a reagent or catalyst.

3. Positioning group (1) according to the preceding claim, comprising means (15) for the emission of the fluid or filler mixture within said casing (P1), said emission means (15) being connected to said support frame (2) in a position interposed between said arms (6).

4. Positioning group (1) according to the claim 1, wherein said arms (6) are extended from said support frame (2) along substantially a vertical direction.

5. Positioning group (1) according to the claim 1, wherein said arms (6) are constrained to said support frame (2) by means of respective brackets (7), each comprising a guide (8) engaged in a slidable manner, along a slide direction (X), with a respective slider (9) constrained to said support frame (2).

6. Positioning group (1) according to claim 1, comprising means (10) for moving said arms (6) in mutual approaching or mutual moving away along said direction (X).

7. Positioning group (1) according to claim 1, comprising means for blowing air inside the casing (P1), said air blowing means being arranged between said arms (6) above said casing (P1) or arranged in said arms (6) themselves, i.e. said arms (6) comprise air outlet holes that are situated in said free ends (14) and possibly also in the lateral surface of said arms (6); such air blowing means being provided for completely extending and opening said casing (P1) itself, and particularly for extending the bottom of said casing (P1), and also for facilitating the extraction of said arms (6) from said casing (P1).

8. Positioning group (1) according to any one of the preceding claims, comprising sensor means (17) for detecting the presence and position of said rigid package or box (B) and/or of said stack of items (A) inside said rigid package or box (B).

9. Positioning group (1) according to the preceding claim, wherein said sensor means (17) comprise at least one pair of probes (18), with rod-like shape, said probes (18) being elastically constrained to said support frame (2) in lateral position, outside said arms (6) and, during use, being extended along a substantially vertical direction.

10. Positioning group (1) according to claim 9, wherein said probes (18) have a greater length than that of said arms (6).

11. Positioning group (1) according to the claim 9, wherein said sensor means (17) comprise sensors (21) operatively connected to said probes (18) in order to detect the movement of said probes (18).

12. Positioning group (1) according to the preceding claim, comprising a control unit operatively connected to said sensors (21) for processing the signals of said sensors (21).

13. Method for positioning at least one protection element (P) of a stack of items (A), such as ceramic plates or tiles, arranged inside a rigid package or box (B), carried out by means of a positioning group according to one of the claims from 1 to 12, comprising the steps of:
supplying a rigid package or box (B) provided with an upper opening in which a plurality of items (A) there are, stacked together inside said rigid package or box (B), said rigid package or box (B) having an interspace (I) between the stack of said items (A) and the walls of said rigid package or box (B);
**characterized by**
picking and gripping said protection element (P) by means of said gripper (5) of said positioning group (1);
introducing said gripper (5) in a predefined position of said interspace (I).

14. Method for positioning a protection element (P) according to the preceding claim, wherein said protection element (P) is made by a casing (P1) and by filler material (P2).

15. Method for positioning a protection element (P) according to claim 13, wherein said step of picking up and gripping said protection element (P) comprises picking up and gripping a casing (P1) by means of said gripper (5) of said positioning group.

16. Method for positioning a protection element (P) according to claim 13, comprising the steps of:
introducing, in said casing (P1), a fluid or a filler mixture capable of expanding and solidifying;
releasing said casing (P1) and extracting said gripper (5) from said rigid package or box (B); and
repeating the preceding steps for the forming of further protection elements (P) inside said interspace (I).

17. Method for positioning a protection element (P) according to claims 15 or 16, wherein said step of picking up and gripping said casing (P1) comprises:
introducing said arms (6) in said casing (P1) until the free ends (14) of said arms (6) are brought in abutment against the bottom of said casing (P1);
widening said arms (6), spacing them from each other along said direction (X) through said movement means (10), until they bring under tension said casing (P1), with a predefined tension value.

18. Method for positioning a protection element (P) according to claims 16 or 17, wherein said step for positioning said gripper (5) in said interspace (I) comprises:
detecting the position of at least one external wall of said rigid package or box (B) by means of said sensor means (17);
lifting said positioning group above said rigid package or box (B);
moving said positioning group inside the wall of said rigid package or box (B), above said interspace (I);
lowering said positioning group inside said rigid package or box (B) until said sensor means are brought in abutment against the bottom of said rigid package or box (B).

## Patentansprüche

1. Gruppe zum Positionieren eines Elements (P) zum Schutz von Gegenständen (A), wie Keramikplatten oder -fliesen, die gestapelt innerhalb einer starren Verpackung oder Schachtel (B) mit einem Zwischenraum (I) angeordnet sind, der innerhalb der starren Verpackung oder Schachtel (B) um den seitlichen Umfang der Gegenstände (A) zwischen der besagten starren Verpackung oder Schachtel (B) und den besagten Gegenständen (A) herum vorhanden ist, die besagte Positionier- und Greifgruppe umfassend einen Stützrahmen (2), Schnellkupplungsmittel (3), die mit einem Arm (4) eines Roboters verbindbar sind, einen Greifer (5), der mit dem besagten Stützrahmen (2) verbunden ist, wobei der besagte Greifer (5) zum Halten des besagten Schutzelements (P) und zum Freigeben desselben in den besagten Zwischenraum (I) geformt ist, das besagte Schutzelement (P) umfassend ein Gehäuse (P1) und ein Füllmaterial (P2), **dadurch gekennzeichnet, dass** der besagte Greifer (5) zwei Arme (6) umfasst, die als stabförmige längliche Elemente geformt sind, die sich einander derart nähern und voneinander wegbewegen können, dass die besagten Arme (6) in das besagte Gehäuse (P1) eingeführt werden können, wobei die besagten Arme (6) der Größe des aufzunehmenden Gehäuses (P1) angepasst werden können und die besagten Arme (6) das besagte Gehäuse (P1) unter Spannung setzen können, wobei jeder der besagten Arme (6) ein freies Ende (14) an einer dem besagten Stützrahmen (2) diametral gegenüberliegenden Position aufweist, wobei das freie Ende (14) abgerundet ist, um ein Durchstechen oder Beschädigen des besagten Gehäuses (P1) zu vermeiden.

2. Positioniergruppe (1) nach Anspruch 1, worin das besagte Füllmaterial (P2) ein Fluid oder ein Füllstoffgemisch und ein Reagens oder einen Katalysator umfasst.

3. Positioniergruppe (1) nach dem vorangegangenen Anspruch, umfassend Mittel (15) zur Ausgabe des Fluids oder Füllstoffgemisches innerhalb des besagten Gehäuses (P1), wobei die besagten Ausgabemittel (15) mit dem besagten Stützrahmen (2) in einer zwischen den besagten Armen (6) angeordneten Position verbunden sind.

4. Positioniergruppe (1) nach Anspruch 1, worin die besagten Arme (6) von dem besagten Stützrahmen (2) entlang einer im Wesentlichen vertikalen Richtung verlängert sind.

5. Positioniergruppe (1) nach Anspruch 1, worin die besagten Arme (6) mittels entsprechender Halterungen (7) an dem besagten Stützrahmen (2) gehalten werden, die jeweils eine Führung (8) aufweisen, die entlang einer Schieberichtung (X) verschiebbar in Eingriff steht, wobei ein entsprechender Schieber (9) an dem besagten Stützrahmen (2) gehalten wird.

6. Positioniergruppe (1) nach Anspruch 1, umfassend Mittel (10) zum Bewegen der besagten Arme (6) in gegenseitiger Annäherung oder gegenseitiger Wegbewegung entlang der besagten Richtung (X).

7. Positioniergruppe (1) nach Anspruch 1, umfassend Mittel zum Blasen von Luft in das Innere des Gehäuses (P1), wobei die besagten Luftblasmittel zwischen den besagten Armen (6) oberhalb des besagten Gehäuses (P1) angeordnet sind oder in den besagten Armen (6) selbst angeordnet sind, d.h. die besagten Arme (6) Luftaustrittslöcher umfassen, die in den besagten freien Enden (14) und gegebenenfalls auch in der Seitenfläche der besagten Arme (6) angeordnet sind; wobei solche Luftblasmittel vorgesehen sind, um das besagte Gehäuse (P1) selbst vollständig zu verlängern und zu öffnen, und insbesondere um den Boden des besagten Gehäuses (P1) zu verlängern und auch, um das Herausziehen der besagten Arme (6) aus dem besagten Gehäuse (P1) zu erleichtern.

8. Positioniergruppe (1) nach irgendeinem der vorangegangenen Ansprüche, umfassend Sensormittel (17) zum Erfassen des Vorhandenseins und der Position der besagten starren Verpackung oder Schachtel (B) und/oder des besagten Stapels von Gegenständen (A) innerhalb der besagten starren Verpackung oder Schachtel (B).

9. Positioniergruppe (1) nach dem vorangegangenen Anspruch, worin die besagten Sensormittel (17) mindestens ein Sondenpaar (18) mit stabförmiger Form umfassen, wobei die besagten Sonden (18) elastisch an dem besagten Stützrahmen (2) in seitlicher Position außerhalb der besagten Arme (6) gehalten werden und während der Verwendung entlang einer im Wesentlichen vertikalen Richtung verlängert werden.

10. Positioniergruppe (1) nach Anspruch 9, worin die besagten Sonden (18) eine größere Länge als die der besagten Arme (6) aufweisen.

11. Positioniergruppe (1) nach Anspruch 9, worin die besagten Sensormittel (17) Sensoren (21) umfassen, die mit den besagten Sonden (18) wirkverbunden sind, um die Bewegung der besagten Sonden (18) zu erfassen.

12. Positioniergruppe (1) nach dem vorangegangenen Anspruch, umfassend eine Steuereinheit, die mit den besagten Sensoren (21) zur Verarbeitung der Signale der besagten Sensoren (21) wirkverbunden ist.

13. Verfahren zum Positionieren mindestens eines Schutzelements (P) eines Stapels von Gegenständen (A), wie keramische Platten oder Fliesen, die in einer starren Verpackung oder Schachtel (B) angeordnet sind, das mittels einer Positioniergruppe gemäß einem der Ansprüche 1 bis 12 ausgeführt wird, umfassend die Schritte des:
Zuführens einer starren Verpackung oder Schachtel (B), versehen mit einer oberen Öffnung, in der eine Vielzahl von Gegenständen (A) vorhanden sind, die innerhalb der besagten starren Verpackung oder Schachtel (B) zusammen gestapelt sind, wobei die besagte starre Verpackung oder Schachtel (B) einen Zwischenraum (I) zwischen dem Stapel der besagte Gegenstände (A) und den Wänden der besagte starren Verpackung oder Schachtel (B) aufweist; **gekennzeichnet durch**
das Aufnehmen und Greifen des besagten Schutzelements (P) mittels des besagten Greifers (5) der besagten Positioniergruppe (1); das Einführen des besagten Greifers (5) in eine vorbestimmte Position des besagten Zwischenraums (I).

14. Verfahren zum Positionieren eines Schutzelements (P) nach dem vorangegangenen Anspruch, worin das besagte Schutzelement (P) durch ein Gehäuse (P1) und durch Füllmaterial (P2) gebildet wird.

15. Verfahren zum Positionieren eines Schutzelements (P) nach Anspruch 13, worin der besagte Schritt des Aufnehmens und Greifens des besagten Schutzelements (P) das Aufnehmen und Greifen eines Gehäuses (P1) mittels des besagten Greifers (5) der besagten Positioniergruppe umfasst.

16. Verfahren zum Positionieren eines Schutzelements (P) nach Anspruch 13, umfassend die Schritte des:
Einbringens eines Fluids oder eines Füllstoffgemisches, das sich ausdehnen und verfestigen kann, in das besagte Gehäuse (P1);
Lösens des besagten Gehäuses (P1) und Herausziehens des besagten Greifers (5) aus der besagten starren Verpackung oder Schachtel (B); und
Wiederholens der vorhergehenden Schritte zur Bildung weiterer Schutzelemente (P) innerhalb des besagten Zwischenraums (I).

17. Verfahren zum Positionieren eines Schutzelements (P) nach Anspruch 15 oder 16, worin der besagte Schritt des Aufnehmens und Greifens des besagten Gehäuses (P1) umfasst:
das Einführen der besagten Arme (6) in das besagte Gehäuse (P1), bis die freien Enden (14) der besagten Arme (6) am Boden des Gehäuses (P1) in Anlage gebracht sind;
das Verbreitern der Arme (6), wobei sie voneinander entlang der besagten Richtung (X) durch die besagten Bewegungsmittel (10) beabstandet sind, bis sie das besagte Gehäuse (P1) mit einem vorbestimmten Spannungswert unter Spannung setzen.

18. Verfahren zum Positionieren eines Schutzelements (P) nach Anspruch 16 oder 17, worin der besagte Schritt des Positionierens des besagten Greifers (5) in dem besagten Zwischenraum (I) umfasst:
das Erfassen der Position mindestens einer Außenwand der besagten starren Verpackung oder Schachtel 1 (B) mittels den besagen Sensormitteln (17);
das Heben der besagten Positioniergruppe über die besagte starre Verpackung oder Schachtel (B);
das Bewegen der besagten Positioniergruppe innerhalb der Wand der besagten starren Verpackung oder Schachtel (B),
über den besagten Zwischenraum (I); das Senken der besagten Positioniergruppe innerhalb der besagten starren Verpackung oder Schachtel (B), bis die besagten Sensormittel gegen den Boden der besagten starren Verpackung oder Schachtel (B) in Anlage gebracht sind.

## Revendications

1. Groupe pour positionner un élément (P) pour protéger des articles (A), tels que des plaques ou des tuiles en céramique, disposés empilés à l'intérieur d'un paquet ou d'une boîte rigides (B), à un espace intermédiaire (I) présent dans le paquet ou la boîte rigides (B) autour du périmètre latéral des articles (A) entre ledit paquet ou ladite boîte rigides (B) et lesdits articles (A), ledit groupe de positionnement et de préhension comprenant un bâti de support (2), des moyens de couplage rapide (3) pouvant être raccordés à un bras (4) d'un robot, une pince (5) raccordée audit bâti de support (2), dans lequel ladite pince (5) est formée pour retenir ledit élément de protection (P) et pour le libérer dans ledit espace intermédiaire (I), ledit élément de protection (P) comprenant une enveloppe (P1) et une matière de remplissage (P2), **caractérisé en ce que** ladite pince (5) comprend deux bras (6), qui sont en forme d'éléments allongés semblables à une tige, qui peuvent s'approcher et s'éloigner l'un de l'autre de telle manière que lesdits bras (6) puissent être insérés dans ladite enveloppe (P1), dans lequel lesdits bras (6) peuvent être adaptés à la taille de ladite enveloppe (P1) qui doit être prélevée et lesdits bras (6) peuvent mettre ladite enveloppe (P1) sous tension, chacun desdits bras (6) comportant une extrémité libre (14) à une position diamétralement opposée audit bâti de support (2), dans lequel ladite extrémité libre (14) est arrondie afin d'empêcher tout percement ou dommage de ladite enveloppe (P1).

2. Groupe de positionnement (1) selon la revendication 1, dans lequel ladite matière de remplissage (P2) comprend un fluide ou un mélange de remplissage et un réactif ou catalyseur.

3. Groupe de positionnement (1) selon la revendication précédente, comprenant des moyens (15) pour l'émission du fluide ou du mélange de remplissage dans ladite enveloppe (P1), lesdits moyens d'émission (15) étant raccordés audit bâti de support (2) dans une position intercalée entre lesdits bras (6).

4. Groupe de positionnement (1) selon la revendication 1, dans lequel lesdits bras (6) sont étendus depuis ledit bâti de support (2) le long d'une direction sensiblement verticale.

5. Groupe de positionnement (1) selon la revendication 1, dans lequel lesdits bras (6) sont retenus sur ledit bâti de support (2) par des supports (7) respectifs, chacun comprenant un guide (8) accouplé de manière coulissante, le long d'une direction de coulissement (X), avec un coulisseau (9) respectif retenu sur ledit bâti de support (2).

6. Groupe de positionnement (1) selon la revendication 1, comprenant des moyens (10) pour déplacer lesdits bras (6) en rapprochement mutuel ou en éloignement mutuel le long de ladite direction (X).

7. Groupe de positionnement (1) selon la revendication 1, comprenant des moyens pour souffler de l'air à l'intérieur de l'enveloppe (P1), lesdits moyens de soufflage d'air étant disposés entre lesdits bras (6) au-dessus de ladite enveloppe (P1) ou disposés dans lesdits bras (6) mêmes, c'est-à-dire que lesdits bras (6) comprennent des orifices de sortie d'air situés dans lesdites extrémités libres (14) et éventuellement également dans la surface latérale desdits bras (6); lesdits moyens de soufflage d'air étant prévus pour s'étendre totalement et ouvrir ladite enveloppe (P1), et particulièrement pour étendre la partie inférieure de ladite enveloppe (P1), et également pour faciliter l'extraction desdits bras (6) depuis ladite enveloppe (P1).

8. Groupe de positionnement (1) selon l'une quelconque des revendications précédentes, comprenant des moyens de capteur (17) pour détecter la présence et la position dudit paquet ou de ladite boîte rigides (B) et/ou de ladite pile d'articles (A) à l'intérieur dudit paquet ou de ladite boîte rigides (B).

9. Groupe de positionnement (1) selon la revendication précédente, dans lequel lesdits moyens de capteur (17) comprennent au moins une paire de sondes (18), avec une forme similaire à une tige, lesdites sondes (18) étant retenues de manière élastique sur ledit bâti de support (2) dans une position latérale, à l'extérieur desdits bras (6) et, pendant l'utilisation, étant étendues le long d'une direction sensiblement verticale.

10. Groupe de positionnement (1) selon la revendication 9, dans lequel lesdites sondes (18) ont une longueur supérieure à celle desdits bras (6).

11. Groupe de positionnement (1) selon la revendication 9, dans lequel lesdits moyens de capteur (17) comprennent des capteurs (21) raccordés pendant l'utilisation auxdites sondes (18) afin de détecter le mouvement desdites sondes (18).

12. Groupe de positionnement (1) selon la revendication précédente, comprenant une unité de commande reliée fonctionnellement auxdits capteurs (21) pour traiter les signaux desdits capteurs (21).

13. Procédé pour positionner au moins un élément de protection (P) d'une pile d'articles (A), tels que des plaques ou des tuiles en céramique, disposés à l'intérieur d'un paquet ou d'une boîte rigides (B), réalisé grâce à un groupe de positionnement selon l'une des revendications de 1 à 12, comprenant les étapes de: fournir un paquet ou une boîte rigides (B) dotés d'une ouverture supérieure dans laquelle une pluralité d'articles (A) se trouvent empilés ensemble dans ledit paquet ou boîte rigides (B), ledit paquet ou boîte rigides (B) comportant un espace intermédiaire (I) entre la pile desdits articles (A) et les parois dudit paquet ou de ladite boîte rigides (B);
**caractérisé par**
le prélèvement et la préhension dudit élément de protection (P) par ladite pince (5) dudit groupe de positionnement (1);
l'introduction de ladite pince (5) dans une position prédéfinie dudit espace intermédiaire (I).

14. Procédé pour positionner un élément de protection (P) selon la revendication précédente, dans lequel ledit élément de protection (P) est constitué d'une enveloppe (P1) et d'une matière de remplissage (P2).

15. Procédé pour positionner un élément de protection (P) selon la revendication 13, dans lequel ladite étape de prélèvement et de préhension dudit élément de protection (P) comprend le prélèvement et la préhension d'une enveloppe (P1) avec ladite pince (5) dudit groupe de positionnement.

16. Procédé pour positionner un élément de protection (P) selon la revendication 13, comprenant les étapes de:
introduction, dans ladite enveloppe (P1), d'un fluide ou d'un mélange de remplissage capable de se dilater et de se solidifier;
relâchement de ladite enveloppe (P1) et extraction de ladite pince (5) dudit paquet ou de ladite boîte rigides (B); et
répétition des étapes précédentes pour la formation d'autres éléments de protection (P) à l'intérieur dudit espace intermédiaire (I).

17. Procédé pour positionner un élément de protection (P) selon les revendications 15 ou 16, dans lequel ladite étape de prélèvement et de préhension de ladite enveloppe (P1) comprend:
l'introduction desdits bras (6) dans ladite enveloppe (P1) jusqu'à ce que les extrémités libres (14) desdits bras (6) soient amenées en butée contre le fond de ladite enveloppe (P1);
l'élargissement desdits bras (6), en les écartant l'un de l'autre le long de ladite direction (X) par lesdits moyens de déplacement (10), jusqu'à ce qu'ils mettent sous tension ladite enveloppe (P1), avec une valeur de tension prédéfinie.

18. Procédé pour positionner un élément de protection (P) selon les revendications 16 ou 17, dans lequel ladite étape de positionnement de ladite pince (5) dans ledit espace intermédiaire (I) comprend:
la détection de la position d'au moins une paroi extérieure dudit paquet ou de ladite boîte rigides (B) au moyen desdits moyens de capteur (17);
le levage dudit groupe de positionnement au-dessus dudit paquet ou de ladite boîte rigides (B);
le déplacement dudit groupe de positionnement à l'intérieur de la paroi dudit paquet ou de ladite boîte rigides (B), au-dessus dudit espace intermédiaire (I);
l'abaissement dudit groupe de positionnement à l'intérieur dudit paquet ou de ladite boîte rigides (B) jusqu'à ce que lesdits moyens de capteur soient amenés en butée contre la partie inférieure dudit paquet ou de ladite boîte rigides (B).
